# EUROPÄISCHE PATENTSCHRIFT

(11) **EP 1 965 945 B1**
(45) Veröffentlichungstag und Bekanntmachung des Hinweises auf die Patenterteilung: **13.05.2009**
(21) Anmeldenummer: 05821590.6
(22) Anmeldetag: 23.12.2005
(51) Int. Cl.: B23K 26/08, B23K 26/06

(54) **SCANNERKOPF UND BEARBEITUNGSMASCHINE DAMIT**
SCANNER HEAD AND MACHINING DEVICE COMPRISING THE SAME
TÊTE DE SCANNER ET DISPOSITIF D'USINAGE COMPRENANT CELLE-CI

(43) Veröffentlichungstag der Anmeldung: 10.09.2008
(73) Patentinhaber: TRUMPF Werkzeugmaschinen GmbH + Co. KG, 71254 Ditzingen (DE)
(72) Erfinder: BOETTCHER, Christian, 70565 Stuttgart (DE)
(74) Vertreter: Kohler Schmid Möbus
(86) Internationale Anmeldenummer: PCT/EP2005/013987
(87) Internationale Veröffentlichungsnummer: WO 2007/079760

(56) Entgegenhaltungen:
- EP-A- 1 424 584
- EP-B- 1 228 835
- DE-A1- 10 027 148
- DE-A1- 10 252 443

## Beschreibung

Die vorliegende Erfindung betrifft einen Scannerkopf gemäss dem Oberbegriff des Anspruchs 1, sowie eine Bearbeitungsmaschine mit einem solchen Scannerkopf.

Unter einem Scannerkopf im Sinne dieser Anmeldung wird eine Baugruppe verstanden, welche an einer 3D-Laserbearbeitungsanlage oder einem Industrieroboter (als Hand) um die erste und zweite Richtung drehbar gelagert werden kann, wobei dem Scannerkopf ein in der Regel kollimierter Laserstrahl zugeführt wird.

Ein solcher Scannerkopf ist in der EP 1 228 835 beschrieben. Der Laserstrahl wird dort mittels einer verschiebbaren Linse auf einen Fokuspunkt fokussiert, um den herum durch Drehung des Scannerspiegels um die zweite Richtung bzw. Verkippen desselben ein zweidimensionales, gewölbtes (kugelschalenförmiges) Arbeitsfeld erzeugt wird. Durch Bewegen der Linse kann die Lage des Fokuspunkts im Raum verändert werden, sodass das Arbeitsfeld zu einem Arbeitsraum erweitert wird.

Aus der DE 100 27 148 A1 ist eine Vorrichtung zur Bearbeitung eines Werkstückes bekannt, bei der im Strahlweg ein beweglich verstellbarer Scannerspiegel angeordnet ist. Unter einem beweglichen Scannerspiegel wird dort ein Scannerspiegel mit einer beweglichen, beispielsweise kardanischen Aufhängung verstanden. Die Verstellbarkeit des Spiegels wird durch eine Verkippung des Spiegels um zwei zueinander senkrechte Achsen bewerkstelligt.

Nachteilig an dem dort beschriebenen Scannerkopf und weiteren, üblichen Scanner-Einrichtungen ist es, dass die Einfallsrichtung des fokussierten Laserstrahles im Wesentlichen senkrecht zum Arbeitsfeld des Scanners ausgerichtet ist. Der Scanner eignet sich dadurch vorwiegend für ebene Bearbeitungen, für räumliche Bearbeitungen sind daher meist zusätzliche Achsbewegungen für das Werkstück erforderlich.

Demgegenüber ist es ist die Aufgabe der vorliegenden Erfindung, einen Scannerkopf der eingangs genannten Art dahingehend weiterzubilden, dass eine weitgehend freie räumliche Orientierung der Lage des Fokuspunkts und damit des Arbeitsraums möglichst einfach und schnell erreicht werden kann.

Diese Aufgabe wird erfindungsgemäß durch einen Scannerkopfs der eingangs genannten Art gelöst, bei dem in der ersten Baueinheit eine adaptive Strahlumlenkungseinheit, insbesondere ein adaptiver Spiegel, vorgesehen ist, und wobei in dem Scannerkopf eine optische Anordnung mit einem strahlaufweitenden Element und einem fokussierenden Element angeordnet ist.

Durch die adaptive Strahlumlenkungseinheit wird die Strahlumlenkung unter einem großen Winkel (ca. 90°) mit der Veränderung der Fokuslage des Laserstrahls in Strahlrichtung kombiniert. Ein als adaptive Strahlumlenkungseinheit dienender adaptiver Spiegel ist aus der EP 1 424 584 A1 der Anmelderin bekannt. Der dort beschriebene adaptive Spiegel ist asphärisch und kann zur Strahlumlenkung um große Winkel (ca. 90°) eingesetzt werden, da durch die asphärische Form die Abbildungsfehler bei der Umlenkung reduziert werden. Alternativ, aber nicht bevorzugt, könnte auch die in der EP 1 424 584 A1 als Stand der Technik beschriebene Kombination aus einem sphärischen Umlenkspiegel mit einem zusätzlichen Umlenkspiegel als adaptive Strahlumlenkungseinheit eingesetzt werden.

Durch die adaptive Strahlumlenkungseinheit kann, wie oben erwähnt, eine Veränderung der Fokuslage des Laserstrahls in Strahlrichtung erzeugt werden. Hierdurch wird dem Arbeitsfeld des Scanners, das zunächst (ohne Fokusverstellung) einen Ausschnitt einer Kugelschale darstellt, eine relevante räumliche Erstreckung in Strahlrichtung erteilt, d.h. aus dem Arbeitsfeld wird ein Arbeitsraum. Zudem kann durch die Verstellung der Fokuslage in Strahlrichtung erreicht werden, dass das (angenähert) sphärische Arbeitsfeld des Scannerspiegels in ein ebenes Arbeitsfeld umgeformt wird, wie es im Scannerbereich üblich ist (vgl. F/theta- bzw. Planfeldobjektiv). Die Verwendung einer adaptiven Optik umgeht die Notwendigkeit einer Verschiebeachse für die Fokusverstellung in Strahlrichtung, wie sie bei der in der EP 1 228 835 beschriebenen Anordnung benötigt wird. Daneben wird bei dem erfindungsgemäßen Scannerkopf die Drehbewegung der zweiten Baueinheit zur Orientierung des Scannerkopfes funktional getrennt von der Drehbewegung des Scannerspiegels, da diese Drehbewegungen technologisch schwierig zu vereinen sind.

Neben der Verwendung eines einzelnen, um eine erste Achse verkippbaren und um eine zweite Achse drehbaren Scannerspiegels können auch zwei getrennte, jeweils um eine einzige Achse verkippbare Scannerspiegel in dem Scannerkopf zum Einsatz kommen. Durch das Vorsehen einer weiteren Dreh- bzw. Kippachse gegenüber der EP 1 228 835 wird eine Trennung in eine Orientierungsachse für das Arbeitsfeld und eine schnelle Scannerachse ermöglicht. Die Aufhängung eines Scannerspiegels zur Verkippung entlang von zwei Achsen kann beispielsweise wie in der DE 102 52 443 A1 oder der DE 202 12 155 U1 der Anmelderin beschrieben ausgeführt sein.

Um bei den üblichen Eingangsdaten des Laserstrahles auf vernünftige optische Verhältnisse zu kommen, die Remote-Welding ermöglichen, ist eine optische Anordnung vorgesehen, die neben der Fokussierung des Laserstrahls mit einem fokussierenden Element, insbesondere mit einem Ellipsoidspiegel oder einer Sammellinse, auch eine Aufweitung des Laserstrahls vornimmt. Diese Aufgabe wird durch ein strahlaufweitendes Element erreicht, das bevorzugt als Parabolspiegel oder Zerstreuungslinse ausgebildet ist. Je nach Anwendung kann es günstig sein, wenn die optische Anordnung vollständig aus reflektiven oder vollständig aus transmissiven Elementen aufgebaut ist. In ersterem Fall umfasst die optische Anordnung bevorzugt einen Parabolspiegel und einen Ellipsoidspiegel, in letzterem Fall bevorzugt eine Zerstreuungslinse und eine Sammellinse. Auch optische Anordnungen, bei denen reflektive und transmissive Elemente kombiniert eingesetzt werden, können von Vorteil sein, insbesondere, um eine durch thermische Effekte hervorgerufene Verschiebung der Fokuslage zu kompensieren. Die Funktionen Strahlaufweitung und Fokussierung können jeweils für sich durch ein einzelnes optisches Element als auch in ihrer jeweiligen Funktion optimierte Kombination mehrerer optischer Elemente ausgebildet sein. Alle diese Ausführungsformen können in Kombination mit einer Bearbeitungsmaschine eingesetzt werden, die bevorzugt mit einem YAG-Laser oder einem CO₂-Laser betrieben wird.

Durch das fokussierende optische Element erfolgt eine Fokussierung des Laserstrahls auf einen Fokuspunkt. Letzterer wird mit dem (den) Scannerspiegel(n) auf ein Arbeitsfeld abgelenkt, um das herum, wie oben beschrieben, mit der adaptiven Strahlumlenkungseinheit ein Arbeitsraum erzeugt werden soll.

Bei einer Bewegung des Scannerkopfs entlang der kartesischen Grundachsen (X,Y,Z) eines kartesischen Roboters wird so der (begrenzte) Arbeitsraum des Scanners auf den der Grundmaschine erweitert und zudem frei räumlich orientierbar. Insbesondere kann z.B. eine KFZ-Karosserie fünfseitig bearbeitet werden, wenn der Scannerkopf mit einem kartesischen Roboter kombiniert/bewegt wird.

Bei einer Ausführungsform ist die optische Anordnung in der zweiten Baueinheit angeordnet. Hierbei können der/die Scannerspiegel und die optische Anordnung in zwei getrennten Baugruppen der zweiten Baueinheit angeordnet sein, wobei der/die Scannerspiegel z.B. in einer separaten Scannereinheit angeordnet sind, die an der die optische Anordnung enthaltenden Baugruppe angeflanscht ist.

Alternativ können der/die Scannerspiegel und die optische Anordnung in einer gemeinsamen, von der zweiten Baueinheit gebildeten Baugruppe integriert sein. Hierdurch wird eine besonders kompakte Bauform ermöglicht.

Bei einer weiteren Ausführungsform ist/sind der/die Scannerspiegel in der zweiten Baueinheit exzentrisch zur zweiten Richtung angeordnet. Hierbei kann der Laserstrahl beispielsweise mittels eines reflektiven optischen Elements der optischen Anordnung aus der zweiten Richtung heraus auf den Scannerspiegel umgelenkt werden, was eine exzentrische Anordnung des Scannerspiegels in der zweiten Baueinheit ermöglicht. Bei einer Drehung der zweiten Baueinheit um die zweite Richtung beschreibt der Scannerspiegel somit einen Kreisbogen, wodurch die beliebige räumliche Orientierung des Arbeitsfelds des Scanners erleichtert wird.

Bei einer weiteren Ausführungsform erfolgt die Umlenkung des Laserstrahls aus der ersten Richtung in die zweite Richtung sowohl durch die adaptive Strahlumlenkungseinheit als auch durch das strahlaufweitende Element oder das fokussierende Element. Das fokussierende bzw. strahlaufweitende Element ist in diesem Fall reflektiv ausgelegt und in der ersten Bauenheit angeordnet. Bevorzugt ist auch das weitere Element der optischen Anordnung in der ersten Baueinheit angeordnet, wobei dieses vorteilhafter Weise transmissiv ausgelegt ist. Durch diese Anordnung wird eine kompakte Bauform des Scannerkopfs erreicht, bei der insbesondere die Länge der zweiten Baueinheit verkürzt werden kann. Dadurch wird der Schwenkradius verringert, was die Positionierungsgenauigkeit erhöht. Weiterhin kann der Scannerspiegel in diesem Fall kleiner dimensioniert werden.

Bei einer bevorzugten Ausführungsform ist der Scannerkopf so ausgelegt, dass der Einfallswinkel des Laserstrahls auf den Scannerspiegel im um die erste Achse unverkippten Zustand von 45° verschieden ist, um den Erfordernissen bei bestimmten Schweißprozessen hinsichtlich Polarisation gerecht zu werden. Dies bedingt jedoch einen erhöhten Aufwand bei der Ansteuerung des Scannerspiegels (Transformation).

Die Erfindung ist weiterhin realisiert in einer Bearbeitungsmaschine zur dreidimensionalen Bearbeitung eines Werkstücks mit einem Scannerkopf wie oben beschrieben, welche eine Einheit zur Verschiebung des Scannerkopfes entlang kartesischer Grundachsen und Winkelgetriebe zur drehbaren Lagerung des Scannerkopfs entlang der ersten und zweiten Richtung aufweist. Insbesondere bei der Verwendung einer 3D-Bearbeitungsmaschine der Anmelderin vom Typ TLC mit drei kartesischen Grundachsen (X, Y, Z) und zwei Drehachsen (B, C) kann das Prinzip der B/C-Achskinematik zur Lagerung des Scannerkopfes herangezogen werden.

Bevorzugte Ausführungsbeispiele der Erfindung werden anhand der schematischen Zeichnung erläutert. Es zeigt:
- Figur 1: eine schematische Darstellung einer ersten Ausführungsform des Scannerkopfes mit einer an einer reflektiven optischen Anordnung angeflanschten Scannereinheit in einem Längs- schnitt;
- Figur 2: eine analoge Darstellung einer zweiten Ausführungsform des Scannerkopfes in kompakter Bauform;
- Figur 3: eine schematische Darstellung der optischen Komponenten einer dritten Ausführungsform des Scannerkopfes mit einer nicht-rechtwinkligen Strahlumlenkung am Scannerspiegel,
- Figur 4: eine schematische Darstellung einer vierten Ausführungsform des Scannerkopfes mit einer transmissiven optischen Anordnung in einem Längschnitt,
- Figur 5: eine analoge Darstellung einer fünften Ausführungsform des Scannerkopfes mit einer transmissiven optischen Anordnung, bei der ein adaptiver Spiegel im Strahlengang zwischen einer Zerstreuungslinse und einer Sammellinse angeordnet ist,
- Figur 6: eine analoge Darstellung einer sechsten Ausführungsform des Scannerkopfes mit einem Parabolspiegel und einer Sammellinse im Strahlengang nach dem adaptiven Spiegel,
- Figur 7: eine analoge Darstellung einer siebten Ausführungsform des Scannerkopfes mit einem adaptiven Spiegel im Strahlengang zwischen einem Parabolspiegel und einer Sammellinse,
- Figur 8: eine analoge Darstellung einer achten Ausführungsform des Scannerkopfes mit einem adaptiven Spiegel im Strahlengang zwischen einer Zerstreuungslinse und einem Ellipsoidspiegel, und
- Figur 9: eine weitere analoge Darstellung einer neunten Ausführungs- form des Scannerkopfes mit einer Zerstreuungslinse und einem Ellipsoidspiegel im Strahlengang vor dem adaptiven Spiegel.

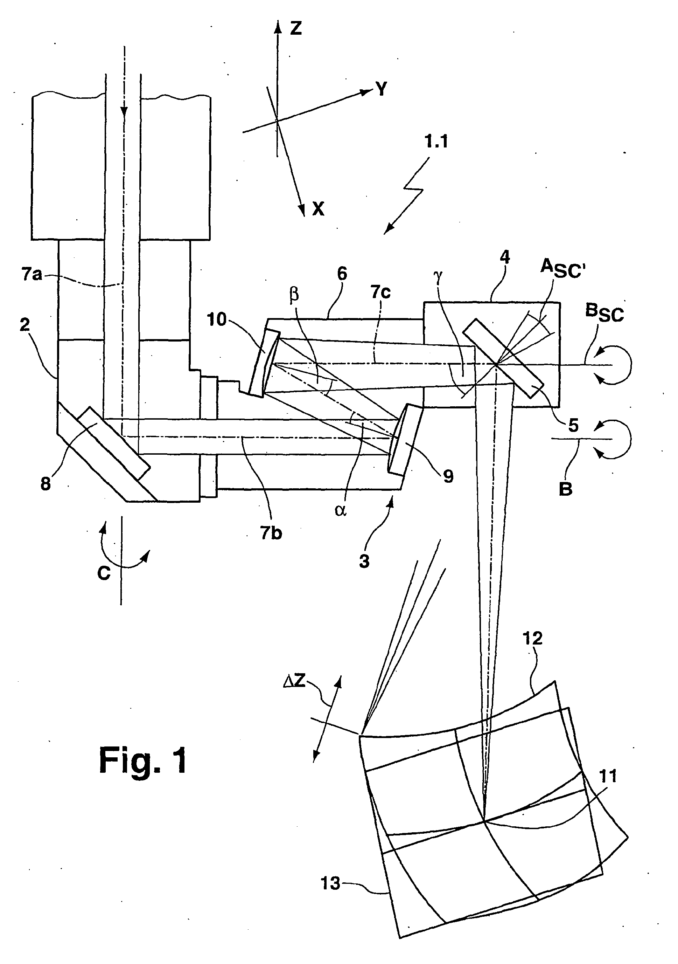

Die **Fig. 1** zeigt einen Scannerkopf **1.1,** welcher aus einer ersten Baueinheit **2,** die entlang einer ersten, vertikalen Richtung **C** drehbar gelagert ist, sowie einer zweiten Baueinheit **3,** welche an der ersten Baueinheit 2 befestigt ist und ebenfalls drehbar um eine zweite, horizontale Richtung **B** gelagert ist, zusammengesetzt ist. Die zweite Baueinheit 3 weist eine Scannereinheit **4** mit einem Scannerspiegel **5** auf, welche am Gehäuse einer optischen Anordnung **6** angeflanscht ist. Der Scannerkopf 1.1 ist an einer nur ausschnittsweise in Fig. 1 dargestellten Bearbeitungsmaschine angebracht, deren drei kartesische Grundachsen **X, Y, Z** dort gezeigt sind.

Ein im Wesentlichen kollimierter Laserstrahl **7a** tritt an der ersten Baueinheit 2 in den Scannerkopf 1.1 ein und trifft dort auf einen adaptiven Umlenkspiegel **8,** welcher eine Umlenkung des Laserstrahls 7a aus der vertikalen Richtung C in die horizontale Richtung B bewirkt. Gleichzeitig wirkt der Umlenkspiegel 8 zur Veränderung der Fokuslage des Laserstrahls in Strahlrichtung, d.h. aus dem kollimierten Laserstrahl 7a wird je nach Einstellung des adaptiven Spiegels 8 ein kollimierter, konvergenter oder divergenter Laserstrahl **7b** geformt. Hierzu ist der Umlenkspiegel 8 beispielsweise über nicht gezeigte Piezoelemente oder durch Druckbeaufschlagung mit Kühlwasser an der Spiegelrückseite deformierbar, wie in der eingangs genannten EP 1 424 584 A1 näher beschrieben. Mit dem adaptiven Spiegel 8 können typischerweise Brennweiten von minimal ca. ± 4000 mm erzielt werden.

Der horizontal ausgerichtete Laserstrahl 7b tritt danach in die zweite Baueinheit 3 ein und trifft dort zunächst auf einen aufweitenden Parabolspiegel **9,** welcher zusammen mit einem im Strahlengang nachfolgenden Ellipsoidspiegel **10** die optische Anordnung 6 bildet. Die Brennweite des Ellipsoidspiegels 10 (effektive Brennweite ca. 800 mm) ist hierbei so gewählt, dass dieser eine Fokussierungswirkung hat und einen konvergenten Laserstrahl **7c** erzeugt. Nachfolgend trifft der fokussierte Laserstrahl 7c auf den Scannerspiegel 5, an dem er nochmals umgelenkt wird, bevor er aus dem Scannerkopf 1.1 austritt, und in einem Fokuspunkt **11** auf ein nicht bildlich dargestelltes Werkstück auftrifft. Der Scannerspiegel 5 ist um eine erste Achse **A_{Sc}** verkippbar, sowie um eine zweite, zur ersten senkrechte Achse **B_{Sc}** drehbar. Alternativ können in dem Scannerkopf 1.1 auch zwei Scannerspiegel vorgesehen sein, die jeweils um zueinander senkrechte Achsen verkippbar sind.

Durch die Verkippung bzw. Drehung des Scannerspiegels 5 um die zwei Achsen A_{Sc}, B_{Sc} wird im Fokuspunkt 11 das nahezu sphärische Arbeitsfeld **12** erzeugt. Durch geeignete Variation der Fokuslage mittels des adaptiven Umlenkspiegels 8 kann dem zunächst sphärischen Arbeitsfeld 12, welches einen Ausschnitt einer Kugelschale darstellt, eine relevante räumliche Erstreckung in Strahlrichtung, welche entlang der Z-Achse eine Höhe von Δ**Z** = ca. ± 150 mm bis ca. ± 200 mm aufweist, gegeben werden. Durch die Z-Verstellung des Fokus ist es auch möglich, aus dem annähernd sphärischen Arbeitsfeld des Scannerspiegels 5 ein ebenes Arbeitsfeld **13** von ca. 350 mm auf 350 mm (X/Y) zu formen, wie es für Scanner üblich ist (vgl. Planfeldobjektiv).

Zur vereinfachten räumlichen Orientierung des Arbeitsfeldes 13 ist der Scannerspiegel 5 exzentrisch um die Richtung B angeordnet, sodass dieser mit einem geringen Schwenkradius von ca. 600 bis 700 mm um die B-Richtung gedreht werden kann. Diese zusätzliche Flexibilität wird dadurch erreicht, dass der Laserstrahl 7b mittels der optischen Anordnung 6 parallel zur B-Richtung verschoben wird, sodass der Scannerspiegel 5 und die zweite Baueinheit 3 um räumlich getrennte Achsen B bzw. B_{Sc} drehbar sind.

Der Einfallswinkel α auf den Paraboloidspiegel 9 und der Einfallswinkel β auf den Ellipsoidspiegel 10 sind bewusst nicht näher spezifiziert, da diese von geometrischen Erfordernissen abhängig sind. Lediglich der Einfallswinkel γ des Laserstrahls 7b auf den Scannerspiegel 5 ist auf ca. 45° eingestellt, was eine vereinfachte Ansteuerung desselben mit sich bringt.

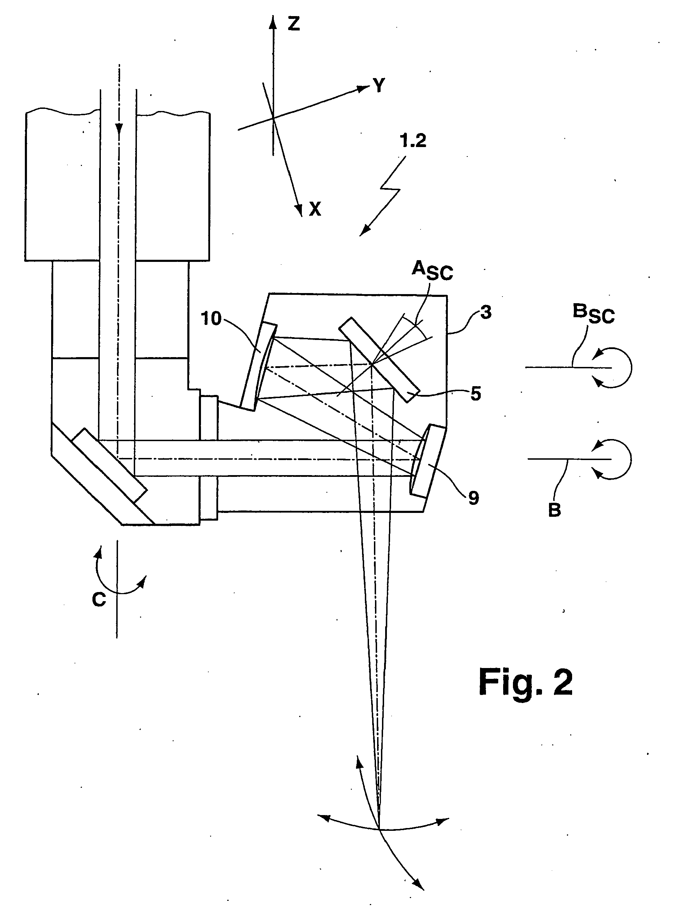

**Fig. 2** zeigt eine Bauform eines Scannerkopfes **1.2,** welcher sich gegenüber dem Scannerkopf 1.1 von Fig. 1 darin unterscheidet, dass der Parabolspiegel 9 und der Ellipsoidspiegel 10 zusammen mit dem Scannerspiegel 5 in einer gemeinsamen Baugruppe angeordnet sind, welche durch die zweite Baueinheit **3** gebildet ist. Hierdurch wird ein im Vergleich zu Fig. 1 kompakterer Aufbau erreicht.

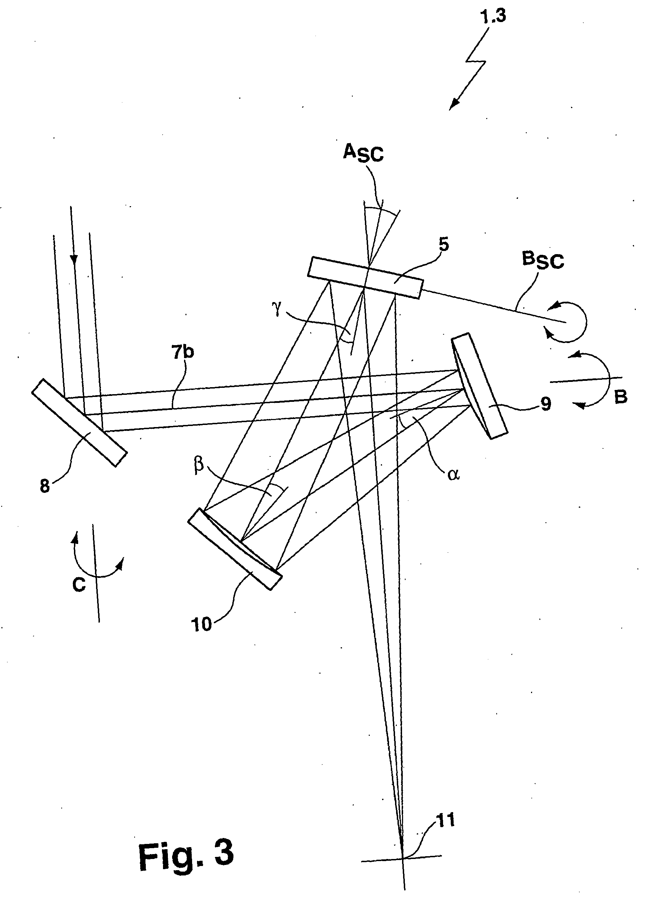

In **Fig. 3** sind zur Vereinfachung der Darstellung lediglich die optischen Komponenten einer weiteren Bauform des Scannerkopfes **1.3** dargestellt, bei welcher die Einfallswinkel α, β, γ des am adaptiven Umlenkspiegel 8 fokussierten Laserstrahls 7b auf den Parabolspiegel 9, den Ellipsoidspiegel 10 bzw. den Scannerspiegel 5 von 45° verschieden gewählt sind. Insbesondere unterscheidet sich diese Bauform somit von den in Fig. 1 und Fig. 2 dargestellten darin, dass keine Umlenkung um 90° am Scannerspiegel 5 stattfindet. Dies kann sich bei bestimmten Schweißprozessen auf die Polarisation des Laserstrahls 7b günstig auswirken. Insbesondere können die drei Einfallswinkel α, β, γ derart gewählt werden, dass sich die gewünschten Polarisationsverhältnisse des Laserstrahls 7b am Fokuspunkt 11 ergeben.

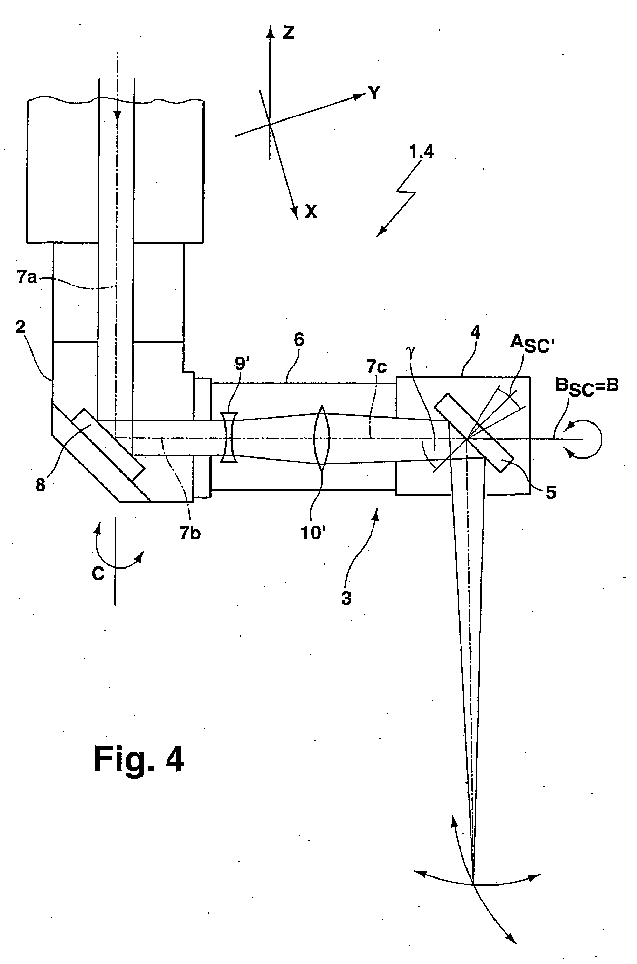

Die in Fig. 1 bis Fig. 3 gezeigten Bauformen des Scannerkopfes 1.1 bis 1.3 zeigen eine optische Anordnung 6 als reflektive Optik. Je nach Anwendungsfall kann es günstiger sein, diese reflektive Optik durch eine transmissive Optik zu ersetzen, wie dies in einem in **Fig. 4** gezeigten Scannerkopf **1.4** der Fall ist. Die dort gezeigte optische Anordnung 6 aus einer Zerstreuungslinse **9'** und einer im Strahlengang nachfolgenden Sammellinse **10'** ist in der zweiten Baueinheit **3** angeordnet. In dieser Bauform fällt die zweite Achse B_{Sc}, um die der Scannerspiegel 5 drehbar ist, mit der zweiten Richtung B zusammen, um welche die zweite Baueinheit 3" drehbar gelagert ist. Ansonsten entspricht der Aufbau des Scannerkofps 1.4 von Fig. 4 dem des in Fig. 1 gezeigten Scannerkopfs 1.1.

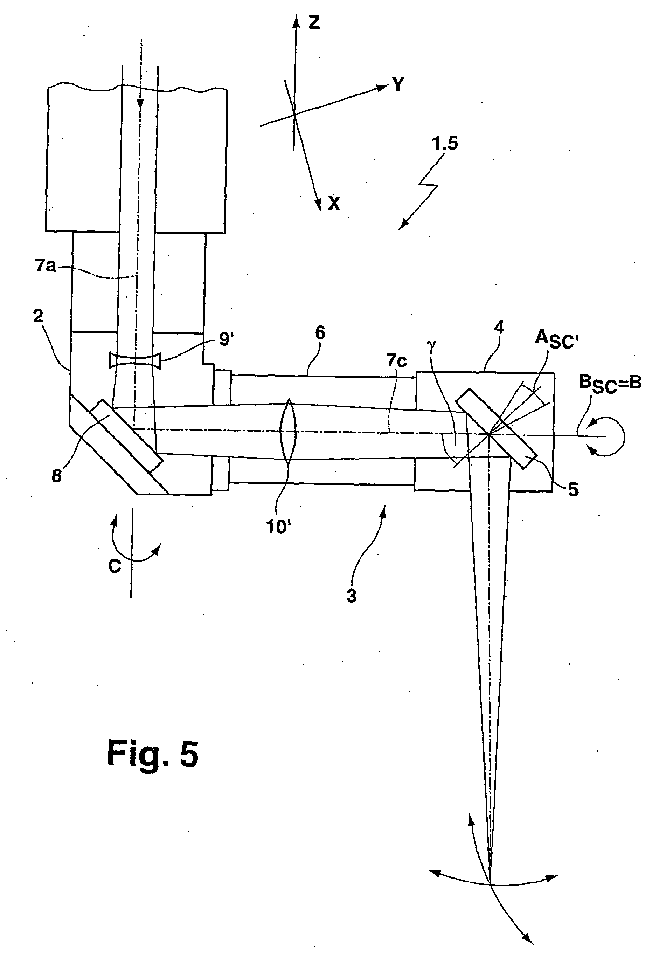

Die **Fig. 5** zeigt wie die Fig. 4 einen Scannerkopf **1.5** mit einer transmissiven optischen Anordnung 6. Im Gegensatz zu Fig. 4 ist hierbei die Zerstreuungslinse 9' im Strahlengang vor dem adaptiven Spiegel 8 in der ersten Baueinheit 2 angeordnet, wohingegen die im Strahlengang nachfolgende Sammellinse 10' in der zweiten Baueinheit 3 angeordnet ist. Hierdurch ist der adaptive Spiegel 8 im divergenten Strahlengang angeordnet, wodurch gegebenenfalls ein kompakterer Aufbau des Scannerkopfs 1.5 erreicht werden kann.

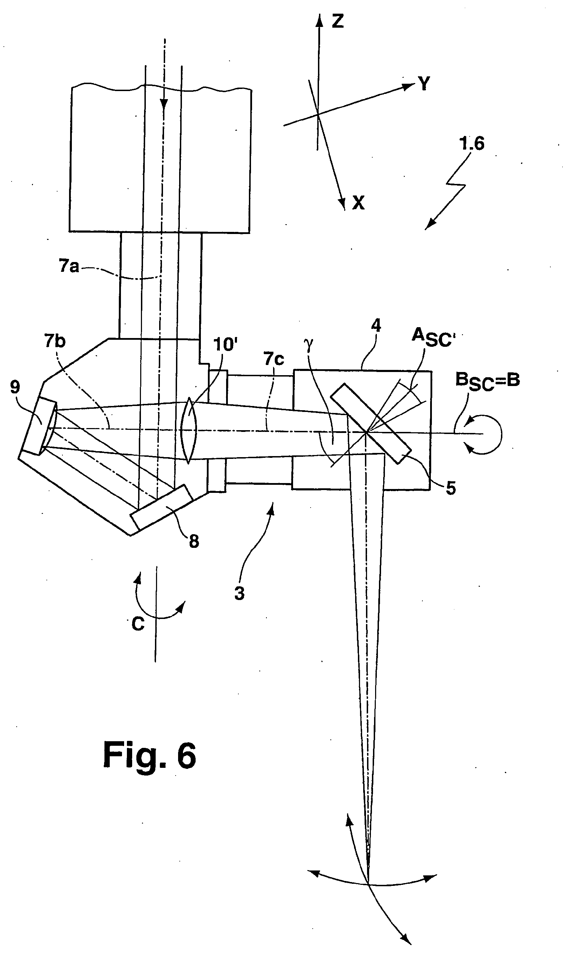

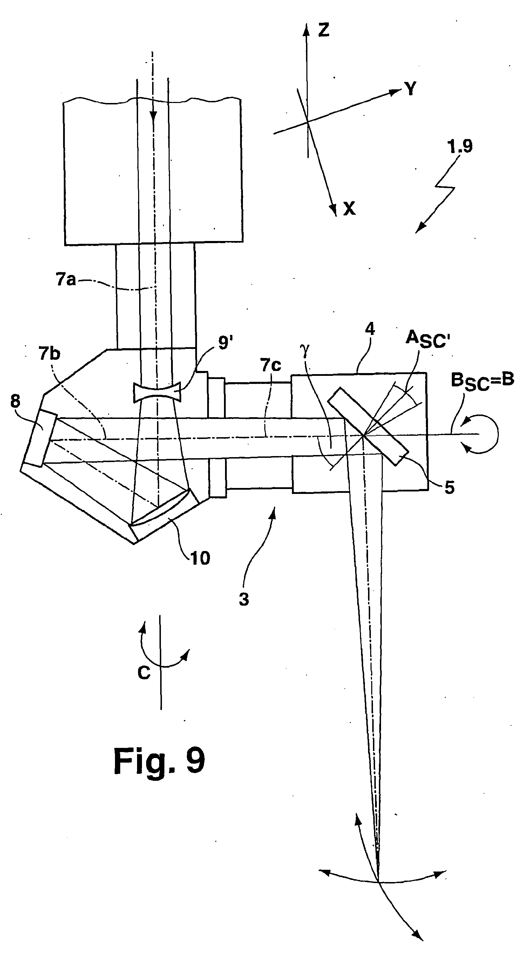

In den in Fig. 1 bis Fig. 5 gezeigten Bauformen des Scannerkopfs 1.1 bis 1.5 wird die 90°-Umlenkung der Laserstrahls 7a aus der ersten Richtung C in die zweite Richtung B ausschließlich durch den adaptiven Spiegel 8 bewirkt. In alternativen Bauformen, wie sie in **Fig. 6,** bis **Fig. 9** gezeigt sind, kann die Strahlumlenkung auch durch eine Kombination aus einer Umlenkung mit dem adaptiven Spiegel 8 und einem reflektiven optischen Element der optischen Anordnung 6 erreicht werden.

Fig. 6 zeigt eine Bauform des Scannerspiegels 1.6, bei der zur Umlenkung aus der ersten Richtung C in die zweite Richtung B ein adaptiver Spiegel 8 und ein Paraboloidspiegel 9 zum Einsatz kommen. Der entlang der zweiten Richtung B verlaufende Laserstrahl 7b wird von einer Sammellinse 10' fokussiert und trifft als konvergenter Strahl auf den Scannerspiegel 5. Der Paraboloidspiegel 9 und die Sammellinse 10' sind in der ersten Baueinheit 2 angeordnet. Hierdurch kann die zweite Baueinheit 3 in horizontaler Richtung gegenüber den Bauformen von Fig. 1 bis Fig. 5 verkürzt ausgelegt werden, wodurch der Schwenkradius des Scannerkopfes 1.6 verringert wird und der Scannerspiegel 5 kleiner dimensioniert werden kann. Weiterhin kann durch die Kombination eines reflektiven Elements (Parabolspiegel 9) mit einem transmissiven Element (Sammellinse 10') eine Verschiebung der Fokuslage durch thermische Effekte zumindest teilweise kompensiert werden.

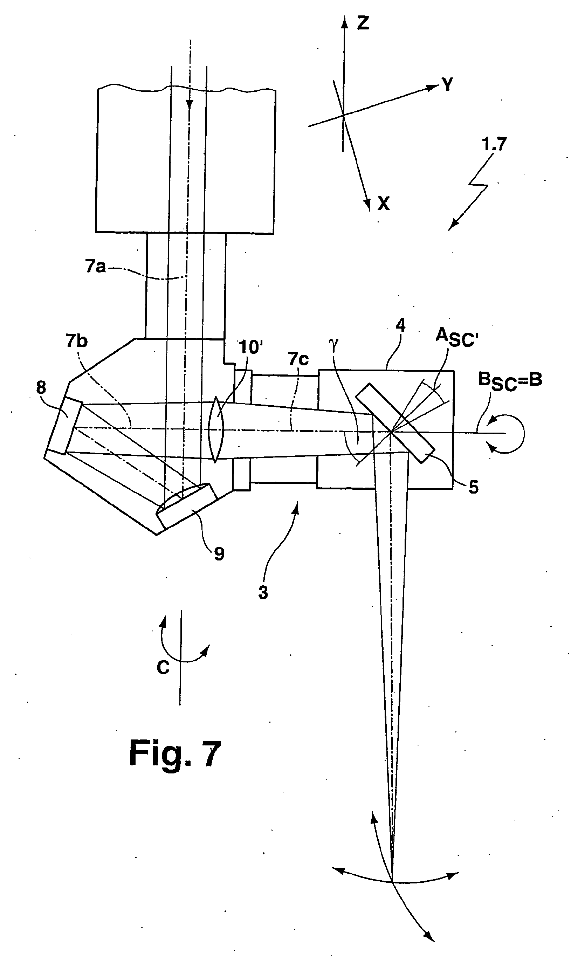

Eine in Fig. 7 gezeigte Bauform des Scannerkopfes **1.7** unterscheidet sich von der Bauform von Fig. 6 lediglich darin, dass die Anordnung des adaptiven Spiegels 8 und des Paraboloidspiegels 9 vertauscht sind. Hierdurch ist der adaptive Spiegel 8 im Strahlengang zwischen dem Paraboloidspiegel 9 und der Sammellinse 10' angeordnet.

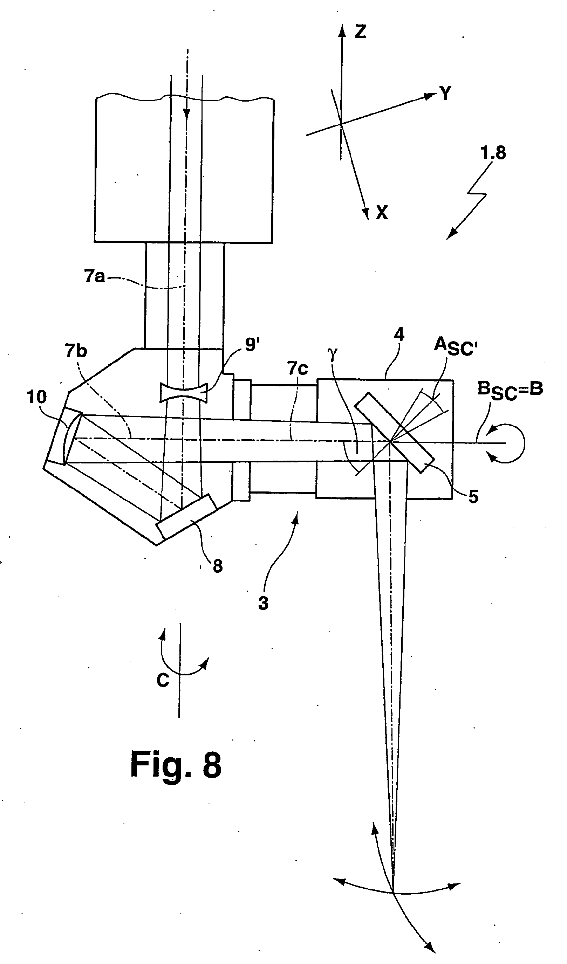

Bei einer in Fig. 8 gezeigten Bauform des Scannerkopfes **1.8** ist in der ersten Baueinheit 2 im Strahlengang entlang der ersten Richtung zunächst eine Zerstreuungslinse 9' angeordnet, welche den Laserstrahl 7a aufweitet. Der aufgeweitete Laserstrahl 7a wird am adaptiven Spiegel 8 und an einem Ellipsoidspiegel 10 umgelenkt und fokussiert, sodass er als konvergenter, entlang der zweiten Richtung B verlaufender Laserstrahl 7c in die zweite Baueinheit 3 eintritt.

Eine weitere Bauform des Scannerkopfes **1.9** unterscheidet sich von der in Fig. 8 gezeigten Bauform lediglich darin, dass die Lage des adaptiven Spiegels 8 und des Ellipsoidspiegels 10 in der ersten Baueinheit 2 vertauscht sind, sodass der adaptive Spiegel 8 im Strahlengang nach der Zerstreuungslinse 9' und dem Ellipsoidspiegel 10 liegt, sodass ein konvergenter, aufgeweiteter Laserstrahl auf diesen Spiegel einfällt.

Die Lage des adaptiven Spiegels 8 und des Ellipsoidspiegels 10 bzw. Paraboloidspiegels 9 relativ zueinander und zum einfallenden Laserstrahl 7a in Fig. 6 bis Fig. 9 sind jeweils derart gewählt, dass durch die Kombination beider Elemente eine 90°-Umlenkung erreicht wird. Alle in Fig. 1 bis Fig. 9 gezeigten Bauformen lassen sich vorteilhaft mit einem geeigneten Bearbeitungslaser, insbesondere einem CO₂-Laser oder einem YAG-Laser betreiben.

Bei den gezeigten Bauformen des Scannerkopfs 1.1 bis 1.9 wird die Variation der Fokuslage in Strahlrichtung durch den adaptiven Spiegel 8 erreicht. Diese Variation findet um den Fokuspunkt 11 statt, der in einer Nennbrennweite des Scannerkopfs 1.1 bis 1.9 liegt, welche durch das fokussierende Linsenelement 10' bzw. Spiegelelement 10 der optischen Anordnung 6 festgelegt ist. Die Festlegung einer Nennbrennweite mittels der optischen Anordnung 6 führt dazu, dass es ausreichend ist, durch die Druckbeaufschlagung des adaptiven Spiegels 8 lediglich eine geringe Brechkraft (entsprechend einer großen (positiven oder negativen) Brennweite) zu erzielen. Durch den adaptiven Spiegel 8 kann außerdem eine schnellere Variation der Fokuslage in Z-Richtung erfolgen als dies z.B. durch Verschiebung von Linsen oder Spiegeln zu erreichen wäre, da diese aufgrund ihrer Masse für schnelle Verschiebungen gewöhnlich zu träge sind.

Die in Fig. 1 bis Fig. 9 gezeigten Bauformen des Scannerkopfes 1.1 bis 1.9 lassen sich jeweils besonders vorteilhaft an einer Bearbeitungsmaschine zur dreidimensionalen Bearbeitung eines Werkstücks, insbesondere einer TLC-Maschine oder einem Industrieroboter, als Funktionseinheit anbringen, wenn diese eine Einheit zur Verschiebung des Scannerkopfes 1.1 bis 1.9 entlang der kartesischen Grundachsen und Winkelgetriebe zur drehbaren Lagerung des Scannerkopfs 1.1 bis 1.9 entlang der ersten und zweiten Richtung B, C sowie eine Strahlungsquelle zur Erzeugung des Laserstrahls aufweist. Mit einer solchen Bearbeitungsmaschine kann unter Verwendung einer der Bauformen des Scannerkopfes 1.1 bis 1.9 z.B. eine KFZ-Karosserie fünfseitig bearbeitet werden.

## Patentansprüche

1. Scannerkopf (1.1 bis 1.9) zur Bearbeitung eines Werkstücks mittels eines fokussierten Laserstrahls (7c), umfassend:
eine entlang einer ersten Richtung (C) drehbar gelagerte erste Baueinheit (2) zur Umlenkung des Laserstrahls (7a) aus der ersten Richtung (C) in eine zweite, vorzugsweise zur ersten senkrechte Richtung (B), und
eine an der ersten Baueinheit (2) befestigte, entlang der zweiten Richtung (B) drehbar gelagerte zweite Baueinheit (3), die einen um eine erste Achse (A_{Sc}) verkippbaren Scannerspiegel (5) aufweist, wobei der eine oder ein weiterer Scannerspiegel (5) in der zweiten Baueinheit (3) um eine zweite, zur ersten senkrechte Achse (B_{Sc}) drehbar oder verkippbar angeordnet ist, **dadurch gekennzeichnet, dass**
in der ersten Baueinheit (2) eine adaptive Strahlumlenkungseinheit, insbesondere ein adaptiver Spiegel (8), vorgesehen ist, und dass
in dem Scannerkopf (1.1 bis 1.9) eine optische Anordnung (6) mit einem strahlaufweitenden Element (9, 9') und einem fokussierenden Element (10, 10') angeordnet ist.

2. Scannerkopf nach Anspruch 1, **dadurch gekennzeichnet, dass** die optische Anordnung (6) als strahlaufweitendes Element einen Parabolspiegel (9) oder eine Zerstreuungslinse (9') umfasst.

3. Scannerkopf nach Anspruch 1 oder 2, **dadurch gekennzeichnet, dass** die optische Anordnung (6) als fokussierendes Element einen Ellipsoidspiegel (10) oder eine Sammellinse (10') umfasst.

4. Scannerkopf nach einem der Ansprüche 1 bis 3, **dadurch gekennzeichnet, dass** die optische Anordnung (6) in der zweiten Baueinheit (3) angeordnet ist.

5. Scannerkopf nach Anspruch 4, **dadurch gekennzeichnet, dass** der/die Scannerspiegel (5) und die optische Anordnung (6) in zwei getrennten Baugruppen angeordnet sind.

6. Scannerkopf nach Anspruch 4, **dadurch gekennzeichnet, dass** der/die Scannerspiegel (5) und die optische Anordnung (6) in einer gemeinsamen Baugruppe integriert sind, welche von der zweiten Baueinheit (3') gebildet wird.

7. Scannerkopf nach einem der vorhergehenden Ansprüche, **dadurch gekennzeichnet, dass** der/die Scannerspiegel (5) in der zweiten Baueinheit (3) exzentrisch zur zweiten Richtung (B) angeordnet ist/sind.

8. Scannerkopf nach einem der Ansprüche 1 bis 3, **dadurch gekennzeichnet, dass** die Umlenkung des Laserstrahls (7a) aus der ersten Richtung (C) in die zweite Richtung (B) sowohl durch die adaptive Strahlumlenkungseinheit als auch durch das strahlaufweitende Element (9) oder das fokussierende Element (10) erfolgt.

9. Scannerkopf nach Anspruch 8, **dadurch gekennzeichnet, dass** die optische Anordnung (6) in der ersten Baueinheit (2) angeordnet ist.

10. Scannerkopf nach einem der vorhergehenden Ansprüche, **dadurch gekennzeichnet, dass** das strahlaufweitende Element (9') ein transmittierendes Element und das fokussierende Element (10) ein reflektierendes Element ist, oder umgekehrt.

11. Scannerkopf nach einem der vorhergehenden Ansprüche, **dadurch gekennzeichnet, dass** der Scannerkopf so ausgelegt ist, dass der Einfallswinkel (γ) des Laserstrahls auf den Scannerspiegel (5) im um die erste Achse (A_{Sc}) unverkippten Zustand von 45° verschieden ist.

12. Bearbeitungsmaschine zur dreidimensionalen Bearbeitung eines Werkstücks mit einem Scannerkopf (1.1 bis 1.9) nach einem der vorhergehenden Ansprüche, **gekennzeichnet durch** eine Einheit zur Verschiebung des Scannerkopfes (1.1 bis 1.9) entlang kartesischer Grundachsen (X,Y, Z) und Winkelgetriebe zur drehbaren Lagerung des Scannerkopfs (1.1 bis 1.9) entlang der ersten und zweiten Richtung (B, C).

## Claims

1. Scanner head (1.1 to 1.9) for processing a workpiece by means of a focused laser beam (7c), comprising:
a first module (2), supported to be rotatable along a first direction (C), for diverting the laser beam (7a) from the first direction (C) into a second direction (B) which is preferably perpendicular to the first direction (C), and
a second module (3) which is fastened to the first module (2), is supported to be rotatable along the second direction (B) and has a scanner mirror (5) which is tiltable about a first axis (A_{Sc}), wherein the one or a further scanner mirror (5) is arranged in the second module (3) so as to be rotatable or tiltable about a second axis (B_{SC}) which is perpendicular to the first axis,
**characterised in that**
an adaptive beam-diverting unit, especially an adaptive mirror (8), is provided in the first module (2), and
an optical arrangement (6) having a beam-widening element (9, 9') and a focusing element (10, 10') is arranged in the scanner head (1.1 to 1.9).

2. Scanner head according to claim 1, **characterised in that** the optical arrangement (6) comprises a parabolic mirror (9) or a diverging lens (9') as the beam-widening element.

3. Scanner head according to claim 1 or 2, **characterised in that** the optical arrangement (6) comprises an ellipsoidal mirror (10) or a converging lens (10') as the focusing element.

4. Scanner head according to any one of claims 1 to 3, **characterised in that** the optical arrangement (6) is arranged in the second module (3).

5. Scanner head according to claim 4, **characterised in that** the scanner mirror(s) (5) and the optical arrangement (6) are arranged in two separate subassemblies.

6. Scanner head according to claim 4, **characterised in that** the scanner mirror(s) (5) and the optical arrangement (6) are integrated in a common subassembly formed by the second module (3).

7. Scanner head according to any one of the preceding claims, **characterised in that** the scanner mirror(s) (5) in the second module (3) is/are arranged eccentrically with respect to the second direction (B).

8. Scanner head according to any one of claims 1 to 3, **characterised in that** the diversion of the laser beam (7a) from the first direction (C) into the second direction (B) is effected both by the adaptive beam-diverting unit and by the beam-widening element (9) or the focusing element (10).

9. Scanner head according to claim 8, **characterised in that** the optical arrangement (6) is arranged in the first module (2).

10. Scanner head according to any one of the preceding claims, **characterised in that** the beam-widening element (9') is a transmissive element and the focusing element (10) is a reflective element or *vice versa.*

11. Scanner head according to any one of the preceding claims, **characterised in that** the scanner head is so configured that the angle of incidence (γ) of the laser beam onto the scanner mirror (5) when the scanner mirror (5) is not tilted about the first axis (A_{Sc}) is other than 45°.

12. Processing machine for three-dimensional processing of a workpiece with a scanner head (1.1 to 1.9) according to any one of the preceding claims, **characterised by** a unit for moving the scanner head (1.1 to 1.9) along cartesian axes (X, Y, Z) and angular gears for rotatably supporting the scanner head (1.1 to 1.9) along the first and second direction (C, B).

## Revendications

1. Tête de balayage (1.1 à 1.9) pour l'usinage d'une pièce au moyen d'un faisceau laser (7c) focalisé, comprenant :
une première unité de construction (2) montée tournante suivant une première direction (C) pour dévier le faisceau laser (7a) de la première direction (C) dans une deuxième direction (B), de préférence perpendiculaire à la première, et
une deuxième unité de construction (3) fixée à la première unité de construction (2), montée tournante suivant la deuxième direction (B), qui présente un miroir de balayage (5) basculant autour d'un premier axe (A_{Sc}), le ou un autre miroir de balayage (5) étant disposé dans la deuxième unité de construction (3) de manière à pouvoir tourner ou basculer autour d'un deuxième axe (B_{Sc}) perpendiculaire au premier,
**caractérisée en ce**
**qu'**une unité de déviation de faisceau adaptative, en particulier un miroir adaptatif (8), est prévue dans la première unité de construction (2) et qu'un dispositif optique (6) avec un élément élargisseur de faisceau (9, 9') et un élément focalisant (10, 10') est disposé dans la tête de balayage (1.1 à 1.9).

2. Tête de balayage selon la revendication 1, **caractérisée en ce que** le dispositif optique (6) comprend un miroir parabolique (9) ou une lentille divergente (9') en tant qu'élément élargisseur de faisceau.

3. Tête de balayage selon la revendication 1 ou 2, **caractérisée en ce que** le dispositif optique (6) comprend un miroir ellipsoïdal (10) ou une lentille convergente (10') en tant qu'élément focalisant.

4. Tête de balayage selon l'une des revendications 1 à 3, **caractérisée en ce que** le dispositif optique (6) est disposé dans la deuxième unité de construction (3).

5. Tête de balayage selon la revendication 4, **caractérisée en ce que** le/les miroir(s) de balayage (5) et le dispositif optique (6) sont disposés dans deux sous-ensembles séparés.

6. Tête de balayage selon la revendication 4, **caractérisée en ce que** le/les miroir(s) de balayage (5) et le dispositif optique (6) sont intégrés dans un sous-ensemble commun qui est formé par la deuxième unité de construction (3).

7. Tête de balayage selon l'une des revendications précédentes, **caractérisée en ce que** le/les miroir(s) de balayage (5) est/sont disposé(s) dans la deuxième unité de construction (3) excentriquement par rapport à la deuxième direction (B).

8. Tête de balayage selon l'une des revendications 1 à 3, **caractérisée en ce que** la déviation du faisceau laser (7a) de la première direction (C) dans la deuxième direction (B) s'effectue aussi bien par l'unité de déviation de faisceau adaptative que par l'élément élargisseur de faisceau (9) ou l'élément focalisant (10).

9. Tête de balayage selon la revendication 8, **caractérisée en ce que** le dispositif optique (6) est disposé dans la première unité de construction (2).

10. Tête de balayage selon l'une des revendications précédentes, **caractérisée en ce que** l'élément élargisseur de faisceau (9') est un élément transmetteur et l'élément focalisant (10') un élément réflecteur, ou vice-versa.

11. Tête de balayage selon l'une des revendications précédentes, **caractérisée en ce que** la tête de balayage est conçue de façon que l'angle d'incidence (γ) du faisceau laser sur le miroir de balayage (5) soit différent de 45° dans l'état non basculé autour du premier axe (A_{Sc}).

12. Machine d'usinage pour l'usinage tridimensionnel d'une pièce avec une tête de balayage (1.1 à 1.9) selon l'une des revendications précédentes, **caractérisée par** une unité pour déplacer la tête de balayage (1.1 à 1.9) le long d'axes cartésiens de base (X, Y, Z) et un renvoi d'angle pour le montage pivotant de la tête de balayage (1.1 à 1.9) suivant la première et la deuxième direction (C, B).
